# EUROPÄISCHE PATENTSCHRIFT

(11) **EP 1 427 593 B1**
(45) Veröffentlichungstag und Bekanntmachung des Hinweises auf die Patenterteilung: **23.03.2011**
(21) Anmeldenummer: 01988075.6
(22) Anmeldetag: 24.12.2001
(51) Int. Cl.: B44C 1/00

(54) **LOKALE VERZIERUNG VON RAUHEN OBERFLAECHEN**
LOCAL DECORATING OF ROUGH SURFACES
DECORATION LOCALE DE SURFACES RUGUEUSES

(30) Priorität: 10.01.2001 DE 10100828
(43) Veröffentlichungstag der Anmeldung: 16.06.2004
(73) Patentinhaber: Senator GmbH & Co. KGaA, 64401 Gross-Bieberau (DE)
(72) Erfinder: FROHNERT, Werner, 32760 Detmold (DE)
(74) Vertreter: Leonhard, Frank Reimund
(86) Internationale Anmeldenummer: PCT/EP2001/015304
(87) Internationale Veröffentlichungsnummer: WO 2002/055320

(56) Entgegenhaltungen:
- DE-A- 2 921 301
- DE-A- 3 005 176
- DE-A- 3 122 133
- DE-A- 19 806 049
- US-A- 3 476 045
- US-A- 5 800 869

## Beschreibung

Die Erfindung befaßt sich mit einem Verfahren zum Herstellen von Gebrauchsobjekten mit einer edlen Oberfläche. Auch umfaßt sind solche von diesem Verfahren hergestellten Objekte.

Satinierte Oberflächen sind edel wirkende Oberflächen von Gebrauchsobjekten. Bei der Glasveredelung werden zum Erhalt dieses besonders hochwertigen und edlen Effektes der Oberfläche Glasobjekte verwendet, deren Oberfläche satiniert oder milchig trüb ausgebildet wird. Das an der Oberfläche milchig trübe Glas wird mittels eines Ätzvorgangs erhalten. Dazu wird ein klares, transparentes Glasobjekt, wie ein Becher oder ein Schreibgerät oder ein sonstiges Gebrauchsobjekt wie Tasse, Flasche, Vase oder Bilderrahmen in eine ätzende Flüssigkeit getaucht, die mit der Oberfläche des Gebrauchsobjektes reagiert. Das Ergebnis ist eine äußere Oberfläche des Glasobjektes, die eine hohe Rauhtiefe aufweist und eine kraterförmige Gestaltung in einer Detailansicht aufweist. Dadurch wird einfallendes Licht gebrochen, gelangt nicht durch das Glasobjekt und die Oberfläche wirkt trüb, milchig oder satiniert. Die innere Oberfläche des Glasbehälters bleibt jedoch völlig glatt. Wird die Behandlung der Oberfläche an einigen Stellen ausgenommen, kommt also das Glasobjekt an diesen Stellen nicht mit der Ätzflüssigkeit in Berührung oder ist es in soweit abgedeckt, wird die Oberfläche an diesen Stellen nicht aufgerauht, bleibt vielmehr glasklar, ebenso wie die gegenüberliegende Oberfläche. Alle von der Ätzflüssigkeit erreichten Stellen werden allerdings matt. Auf diese Weise kann eine Kennzeichnung oder Verzierung, wie eine Beschriftung im Sinne einer Werbebotschaft, eines Unternehmensnamens oder eines Musters aufgebracht werden, die einen besonders hochwertigen, edlen Effekt aufgrund der Gegenüberstellung eines milchig weißen Umfeldes und eines (glasklar) transparent wirkendes Schriftzuges oder Musters besitzt.

Aus der DE-A-198 06 049 (Bodenseewerk Perkin-Elmer) ist ein Kennzeichnungsverfahren für Probenbehälter bekannt. Auf eine mattierte Glasfläche des Probenbehälters wird mit einem Tintenstrahldruckverfahren schwarze oder mehrfarbige Tinte aufgesprüht. Diese Kennzeichnung wird danach zwischen 300°C und 600°C erwärmt, um Bestandteile der Tinte zu verflüchtigen, die bei einer Messung mit dem Probenbehälter für Kontaminationen sorgen würden.

Aus der DE-A 31 22 133 (Hermann Seidl) sind Spiegel mit Ornamenten dem Fachmann zugänglich, bei denen das Spiegelglas mit eingeätzten Vertiefungen versehen wird, die entweder auf der Oberfläche oder verdeckt in einen Zwischenbereich zwischen der Spiegelschicht und dem Glas angebracht sind. In diese Vertiefung wird Farbe eingebracht, so dass diese Farbe nicht aufragt und auch nicht leicht beschädigt oder abgekratzt werden kann. Durchaus erwähnt ist dabei ein Siebdruckverfahren, dort Seite 5, und ein Ätzverfahren, dort Seite 6, dritter Absatz, welches die entsprechenden freiliegenden Stellen ätzt und auf der Glasoberfläche Vertiefungen 9 ausbildet, die nach dem Entfernen des Ätzmittels auf der Glasplatte verbleiben. Die eingeätzten Vertiefungen sind matte Stellen im Glas.

Die Erfindung hat es **sich zur Aufgabe gestellt**, ein Herstellungsverfahren der Eingangs angegebenen Art zu vereinfachen, wobei die Oberfläche von Objekten so veredelt werden soll, daß der selbe hochwertige und edle Effekt als beispielsweise Werbeträger oder Kunstobjekt entsteht, wobei aber die Kosten des Herstellungsverfahrens gesenkt werden sollen, gleichzeitig Flexibilität, Vielseitigkeit und leichte Anpassbarkeit an verschiedene optische Gestaltungen der Verzierungen oder Kennzeichnungen, insbesondere der Schriftzüge möglich sind.

Erreicht wird das mit einem Verfahren, bei dem zunächst von einer vollständig satinierten oder milchig trüben Oberfläche des Glasobjektes zumindest in demjenigen Bereich ausgegangen wird, der die Kennzeichnung tragen soll. Der Bereich ist dabei größer als die Kennzeichnung, bevorzugt die gesamte Oberfläche des aus Glas bestehenden Gebrauchsobjektes. In diesen Bereich hinein wird die Verzierung oder Kennzeichnung plaziert, wobei ein Fluid aufgetragen wird, das die milchig trübe Oberfläche an dem Auftragsort wieder zu einer glatten Oberfläche werden läßt.

Auch weit das Fluid durchsichtig ist entsteht erfindungsgemäß die glasklare transparente Oberfläche nur dort, wo die Verzierung tatsächlich ist, also z.B. in Gestalt des Schriftzuges. Die satinierte oder getrübte (im folgenden als "charakteristisch" bezeichnete) Oberfläche wird damit in diesem Bereich verändert, allerdings ist das Ausgangsprodukt bereits vollständig in dem Anbringungsbereich satiniert, so daß die Satinierung in dem Beschriftungsbereich aufgehoben wird (Anspruch 1).

Anders als der Stand der Technik wird nicht beim Satinieren ein bestimmter Bereich ausgespart, der anschließend die Verzierung oder Kennzeichnung bildet, vielmehr wird zunächst vollständig und damit vereinfacht die Oberfläche veredelt durch eine matte Struktur, und diese matte Oberfläche nur teilweise wieder in eine glatte Oberfläche umgewandelt, beispielsweise durch einen Siebdruck oder einen Tampondruck, mit dem das auf der Oberfläche haftende Fluid die Verzierung in ihrer Form und Gestalt (lokal begrenzt) definiert.

Das Fluid kann ein Quarzfluid sein (Anspruch 2). Das aus Glas oder glasähnlichem Werkstoff bestehende Gebrauchsobjekt, das durch das Verfahren entsteht, ist an der Beschichtungsstelle mit einer Grenzschicht versehen, die zwischen dem ausgehärteten Fluid und der Glasoberfläche liegt.

Ist die gegenüberliegende Oberfläche durchlässig und da das Fluid als Quarzfluid ebenfalls lichtdurchlässig ist, entsteht im Zuge eines Lichtstrahles, der senkrecht auf die bevorzugt aufgedruckte Kennzeichnung strahlt, ein bevorzugt glasklarer, zumindest aber transparenter Effekt, der außerhalb der Kennzeichnung oder Verzierung nicht besteht. Die Kennzeichnung oder Verzierung wird glasförmig mit einer glatten Oberfläche, während das Umfeld satiniert matt wirkt, was den edlen Charakter hervorruft, ohne die Schwierigkeiten beim Herstellprozess zu haben und die Verzierung bereits bei der Satinierung berücksichtigen zu müssen.

Durch Einsatz von zwei verschiedenen Verfahren, dem Ätzverfahren zum Satinieren und dem Druckverfahren zum begrenzten Kompensieren der Satinierung an der Stelle des Schriftzuges erleichtert sich die Beschriftung, und erleichtert sich damit die Herstellung der Gebrauchsobjekte. Man kann eine Vielseitigkeit begründen, bei der die satinierten Oberflächen an einer Stelle (beim Hersteller des Glasobjektes) hergestellt werden und als Vorprodukte geliefert werden; erst bei dem Zweitunternehmen wird die Definition der Kennzeichnung oder Verzierung ausgewählt, plaziert und damit realisiert.

Es muß betont werden, daß die Beschichtung durch das Fluid, das auf der Oberfläche haftet und anschließend trocknet oder aushärtet, nicht zwingend eine glasklare Kennzeichnung oder Verzierung ergeben muß, vielmehr ist auch eine von der Struktur her andere Oberfläche von der Erfindung umfaßt, beispielsweise eine farbig durchsichtige Oberfläche, wenn sie im wesentlichen glatt ist gegenüber der satinierten Oberfläche im Randbereich um die Beschriftung und im übrigen Bereich darum herum (Anspruch 8).

Der übrige Bereich wird als Fläche oder vollflächiger Bereich bezeichnet, während der selektive Bereich derjenige der Kennzeichnung, Verzierung, insbesondere Beschriftung ist. Der vollflächige Bereich muß nicht zwangsläufig den gesamten Gegenstand (das Gebrauchsobjekt) bedecken, vielmehr kann er auch einen Abschnitt davon bedecken, der aber größer ist als die Kennzeichnung oder Verzierung.

Das Fluid mit dem vorgegebenen Druckverfahren bestimmt die Form der Verzierung oder Kennzeichnung. Andere Auftragsvarianten sind auch einsetzbar, soweit mit ihnen eine vorbestimmbare oder festlegbare (lokale) Begrenzung der zu beschichtenden (größeren) Flächenstücke möglich ist.

Die Verzierung wird - so das Herstellverfahren - erst nach der Satinierung aufgebracht (Anspruch 5). Die vorsatinierten Gebrauchsobjekte können gelagert werden und nach Bedarf und Kundenwunsch mit spezifischen Schriftzügen oder Verzierungen versehen werden.

Die Rückseite, also die gegenüberliegende Oberfläche der Wand des Gebrauchsobjektes, das außenseitig die Satinierung und die vergleichmäßigende Verzierung trägt, ist ebenfalls frei gestaltbar. Sie kann farbig gestaltet werden, oder auch bedruckt werden.

Die Abschnitte des Schriftzuges als Möglichkeit einer Kennzeichnung oder Verzierung haben einen anderen Werkstoff als das Glas an seiner Oberfläche, außerhalb der Verzierung verbleibt die geätzte, kraterförmige Oberfläche. Besonders vorteilhaft wirkt eine glasklare Schrift, bei der die Gegenseite der Oberfläche durchlässig und glatt und die durch Druck aufgebrachte Verzierung ebenfalls in ihrer Oberfläche glatt und glasklar ist, dagegen außerhalb der Verzierung die satinierte Oberfläche vorherrscht (Anspruch 8).

Ausführungs**beispiele** erläutern und ergänzen die Erfindung.
- **Figur 1**: ist eine Seitenansicht eines Bechers 10 mit einem Henkel 11.
- **Figur 2**: ist ein Kugelschreiber mit einem Schaft 15.
- **Figur 3**: ist eine Ausschnittsvergrößerung aus einer Oberfläche nach den Figuren 1 oder 2, wobei die Rauhigkeit 13 der Oberfläche stark vergrößert dargestellt ist, zur Verdeutlichung des Effektes.

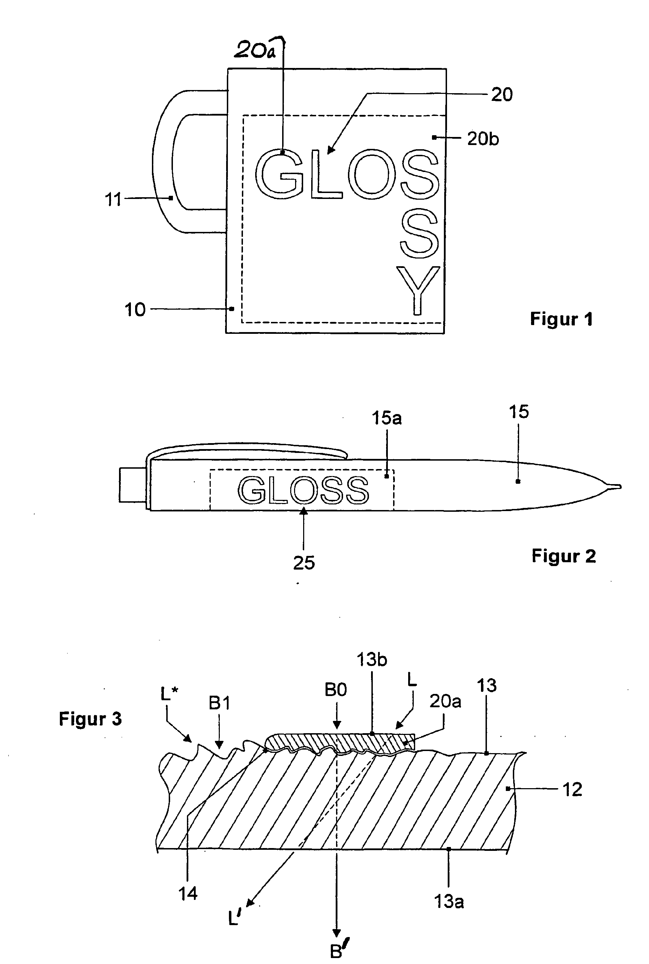

Die in **Figur 1** dargestellte Tasse hat eine im wesentlichen zylindrische Oberfläche. Auf dieser zylindrischen Oberfläche ist ein Schriftzug 20 im Bereich 20b als Darstellung einer Kennzeichnung oder Verzierung vorgesehen. Die Oberflächenstruktur außerhalb des Schriftzuges 20, dessen Großbuchstabe "G" mit 20a benannt ist, ist satiniert oder milchig weiß im Sinne einer nicht transparenten (rauhen) Oberfläche gestattet. Diese Oberfläche entsteht durch ein Ätzverfahren, das aus der zuvor klaren und vollständig durchsichtigen Oberfläche des Glasbechers 10 eine Oberfläche schafft, die zwar lichtdurchlässig, aber nicht sichtdurchlässig ist. Die Oberfläche wirkt matt und hat eine Gestalt, wie sie im Querschnitt in **Figur 3** mit 13 als kraterförmig zu bezeichnen ist.

Die in Figur 3 dargestellte Oberfläche 13 auf der Glaswand 12, die die Becherwand des Bechers 10 darstellt, ist beispielsweise durch Flußsäure hergestellt, wenn der Becher mit seiner äußeren Oberfläche eine vorgegebene Zeitspanne in eine Säure getaucht und dabei an der Oberfläche geätzt wird.

Der herausgenommene Becher ist im wesentlichen vollumfänglich in seiner Oberfläche so gestaltet, wie die Oberfläche 13 angibt.

Eine Beschriftung der Oberfläche, im Sinne einer Verzierung oder Kennzeichnung, die auch mit anderen Logos ergänzt werden kann, ist in einem Druckverfahren möglich, bei dem die Verzierung oder Kennzeichnung aufgedruckt wird, und zwar auf die kraterförmige Oberfläche 13 von Figur 3.

Dieses Verfahren verwendet einen Siebdruck oder einen Tampondruck, wobei als "Druckfarbe" ein Quarzfluid verwendet wird, das im Querschnitt in Figur 3 als Großbuchstabe "G" bei 20a ersichtlich ist. Durch diese Auftragsvariante wird eine flüssige Schicht in Gestalt des Buchstabens "G" aufgedruckt, vergleichmäßigt an der Druckstelle die Oberfläche 13 und bildet eine glatte Oberfläche 13b. Diese glatte Oberfläche ist lichtdurchlässig, bezogen auf einen senkrecht einfallenden Blick B0, der bei einer gegenüberliegenden glatten Oberfläche 13a vollständig durch die Glaswand 12 hindurchreicht. Eine schräg einfallende Lichtstrahlung L wird teilweise reflektiert und ist teilweise durchgängig zum Erhalt des durchstrahlten Lichtstrahls L'.

Anders als im Schriftzugbereich 13b ist der Bereich außerhalb noch immer oberflächig mit Kratern versehen, so dass ein Blick B1 nicht durch die Wand 12 hindurch reicht, die Oberfläche aber milchig erscheint. Ein schräg einfallender Lichtstrahl L* wird nicht durchstrahlt, erhellt aber durch Streuung die Oberfläche, so daß eine milchige Farbe entsteht.

Die gegenüberliegende Fläche 13a kann zusätzlich beschichtet werden, wenn Farbeffekte oder andere Durchstrahlungseffekte gewünscht werden.

Die Druckfarbe als Quarzfluid ist so gewählt, daß sie möglichst glasähnlich ist. Wird eine andere Farbe verwendet oder eine nicht durchlässige sondern opake Farbe gewählt, kann der Unterschied zwischen matt und glatt das Design der Außenseite des Bechers 10 auch gestalten. Mit Temperatureinfluß kann die Trocknung oder Aushärtung beschleunigt werden.

Anders als bei bisherigen Herstellverfahren sind die doppelt behandelten Stellen glasklar oder glatt, während diese Stellen im Stand der Technik diejenigen waren, die nicht behandelt waren. Diejenigen Stellen außerhalb der Kennzeichnung, die einmal durch einen Ätzprozeß behandelt waren sind ähnlich. Durch das Druckverfahren bildet sich zwischen dem Quarzfluid 20a und der unebenen Oberfläche 13 eine Zwischenschicht 14 als Bindeglied zur Ausübung von Haftkräften auf die aufgedruckten Kennzeichnungssymbole.

Statt eines Bechers 10 können auch andere Gebrauchsobjekte, wie Gläser, Vasen, Spiegel oder Töpfe sowie Flaschen Anwendung finden. Möglich sind sogar Schreibgeräte nach Figur 2, die nicht zwingend aus Glas gestaltet sein müssen. Sie können aus einen glasähnlichen Kunststoff gestaltet sein, der im wesentlichen durchsichtig ist, wobei ein Bereich 15a festgelegt wird, in dem die Kennzeichnung 25 angebracht werden soll. Nur dieser Bereich braucht satiniert zu sein, wenn der Kontrast zwischen rauh (matt) und glatt (Schrift 25) hervorstechen soll.

Anstelle des eingegrenzten Bereiches 15a kann auch das ganze Schreibgerät 15 im Schaft satiniert sein, wobei die übrigen Bestandteile des Schreibgerätes (Clip und Drücker, sowie Schreibspitze) nicht gesondert erläutert werden müssen.

## Patentansprüche

1. **Verfahren zum Herstellen von** Oberflächenstrukturen auf einem Gebrauchsobjekt (15,10), wobei das Gebrauchsobjekt im Wesentlichen vollständig aus Glas oder einem glasähnlichen Werkstoff besteht, bei welchem Verfahren das Gebrauchsobjekt zumindest bereichsweise eine satinierte oder milchig trübe Oberfläche (13) als charakteristische Oberfläche aufweist;
(a) die satinierte oder getrübte charakteristische Oberfläche (13) in einem Zielbereich (15a, 20b), in dem eine Verzierung oder Kennzeichnung (25, 20) erfolgen soll, im.Wesentlichen durchgehend oder vollflächig von gleichem Charakter ist;
(b) die Verzierung oder Kennzeichnung (20,25;20a) in dem Zielbereich (15a,20b) durch Auftragen eines Fluids auf die charakteristische Oberfläche (13) entsteht, um die Oberfläche in einer Form oder Gestalt (20a) der Verzierung oder Kennzeichnung zu vergleichmäßigen und die Verzierung oder Kennzeichnung im Zielbereich transparent erscheint.

2. Verfahren nach Anspruch 1, wobei das Fluid ein Quarzfluid ist, insbesondere ein farbiges Fluid, mit einer gegenüber der satinierten Oberfläche abweichenden Farbe.

3. Verfahren nach Anspruch 1 oder 2, wobei das Fluid härtend, insbesondere selbsthärtend ist, bevorzugt auch durch Temperatureinfluss.

4. Verfahren nach einem der vorigen Ansprüche, wobei das Fluid in Form der Verzierung oder Kennzeichnung (20, 20a) im Siebdruckverfahren oder Tamponverfahren aufgebracht wird.

5. Verfahren nach einem der vorigen Ansprüche, wobei die Verzierung (20a) später als die Satinierung (13) auf die Oberfläche des Gebrauchsobjektes (15, 10) als Krug oder Tasse aufgebracht wird.

6. Verfahren nach Anspruch 1, wobei die Satinierung oder die Einbringung einer milchig trüben Oberfläche (13) des Gebrauchsobjektes durch einen Ätzprozess erfolgt, wobei das Gebrauchsobjekt zumindest in dem Bereich der Behandlung aus Glas ist.

7. Verfahren nach Anspruch 1 oder 6, wobei die Verzierung oder Kennzeichnung (25, 20) eine Beschriftung ist.

8. Verfahren nach einem der vorigen Ansprüche, wobei die Kennzeichnung oder Verzierung glasklar und im wesentlichen vollständig durchsichtig ist, nach Aufbringen auf die satinierte oder getrübte charakteristische Oberfläche (13), aber der Oberflächenabschnitt **außerhalb** der Verzierung (20a) oder Kennzeichnung weiterhin getrübt bleibt.

9. Verfahren nach Anspruch 1 oder 7, wobei die Kennzeichnung oder Verzierung ein Schriftzug ist.

## Claims

1. Method for producing surface structures on a utility object (15, 10), wherein the utility object consists essentially completely of glass or a material similar to glass, in which method the utility object has at least in some regions a glazed or milky opaque surface (13) as a characteristic surface;
(a) the glazed or opacified characteristic surface (13) in a target region (15a, 20b) in which a decoration or marking (25, 20) is to be provided, is of the same character essentially throughout or over the entire surface;
(b) the decoration or marking (20, 25; 20a) in the target region (15a, 20b) is produced by applying a fluid to the characteristic surface (13) to even out the surface in a form or design (20a) of the decoration or marking and the decoration or marking appears transparent in the target region.

2. Method according to claim 1, wherein the fluid is a quartz fluid, in particular a coloured fluid, with a colour which is different compared to the glazed surface.

3. Method according to claim 1 or 2, wherein the fluid is hardening, in particular self-hardening, preferably also due to the influence of temperature.

4. Method according to one of the previous claims, wherein the fluid is applied in the form of the decoration or marking (20, 20a) by the screen printing process or tampon process.

5. Method according to one of the previous claims, wherein the decoration (20a) is applied later than the glazing (13) to the surface of the utility object (15, 10) as a mug or cup.

6. Method according to claim 1, wherein the glazing or the introduction of a milky opaque surface (13) of the utility object is effected by an etching process, wherein the utility object is made from glass at least in the region of the treatment.

7. Method according to claim 1 or 6, wherein the decoration or marking (25, 20) is an inscription.

8. Method according to one of the previous claims, wherein the marking or decoration is as clear as glass and essentially completely transparent after application to the glazed or opacified characteristic surface (13), but the surface section outside of the decoration (20a) or marking continues to remain opacified.

9. Method according to claim 1 or 7, wherein the marking or decoration is writing.

## Revendications

1. Procédé de formation de structures superficielles sur un objet d'usage courant (15, 10), dans lequel l'objet d'usage courant se compose essentiellement en entier de verre ou d'un matériau analogue au verre, procédé dans lequel l'objet d'usage courant présente au moins par zones une surface caractéristique (13) d'aspect lustré ou laiteux;
(a) la surface caractéristique d'aspect lustré ou laiteux (13) présente de manière essentiellement continue ou totale le même caractère dans une zone cible (15a, 20b), dans laquelle une décoration ou un marquage (25, 20) doit être réalisé(e);
(b) la décoration ou le marquage (20, 25; 20a) se forme dans la zone cible (15a, 20b) par le dépôt d'un fluide sur la surface caractéristique (13), pour uniformiser la surface dans une forme ou une configuration (20a) de la décoration ou du marquage et la décoration ou le marquage apparaît transparent(e) dans la zone cible.

2. Procédé selon la revendication 1, dans lequel le fluide est un fluide de quartz, en particulier un fluide coloré, avec une couleur qui diffère de la surface lustrée.

3. Procédé selon la revendication 1 ou la revendication 2, dans lequel le fluide est durcissant, de préférence auto-durcissant, de préférence aussi sous l'influence de la température.

4. Procédé selon l'une quelconque des revendications précédentes, dans lequel on dépose le fluide sous la forme d'une décoration ou d'un marquage (20, 20a) par le procédé de sérigraphie ou par un procédé au tampon.

5. Procédé selon l'une quelconque des revendications précédentes, dans lequel on dépose la décoration (20a) plus tard que le lustrage (13) sur la surface de l'objet d'usage courant (15, 10) ayant la forme d'une chope ou d'une tasse.

6. Procédé selon la revendication 1, dans lequel on effectue le lustrage ou la formation d'une surface dépolie translucide (13) de l'objet d'usage courant par un procédé de gravure, dans lequel l'objet d'usage courant est en verre au moins dans la zone du traitement.

7. Procédé selon la revendication 1 ou la revendication 6, dans lequel la décoration ou le marquage (25, 20) est une inscription.

8. Procédé selon l'une quelconque des revendications précédentes, dans lequel le marquage ou la décoration est clair(e) comme le verre et est essentiellement entièrement transparent(e), après le dépôt sur la surface caractéristique d'aspect lustré ou dépoli (13), mais la partie de la surface située à l'extérieur de la décoration (20a) ou du marquage reste encore dépolie.

9. Procédé selon la revendication 1 ou la revendication 7, dans lequel le marquage ou la décoration est une griffe.
